Europäisches Patentamt

European Patent Office

Office européen des brevets

(11) Veröffentlichungsnummer : **0 039 416**
**B1**

# (12) EUROPÄISCHE PATENTSCHRIFT

(45) Veröffentlichungstag der Patentschrift :
09.03.83

(51) Int. Cl.³ : **G 03 B 23/04**

(21) Anmeldenummer : 81102592.3

(22) Anmeldetag : 07.04.81

(54) **Diaprojektor und Diamagazin.**

(30) Priorität : 30.04.80 DE 3016757

(43) Veröffentlichungstag der Anmeldung :
11.11.81 Patentblatt 81/45

(45) Bekanntmachung des Hinweises auf die Patenterteilung : 09.03.83 Patentblatt 83/10

(84) Benannte Vertragsstaaten :
BE FR GB IT

(56) Entgegenhaltungen :
EP A 0 011 229
EP A 0 011 740
DE A 2 038 441
DE B 2 827 190

(73) Patentinhaber : **AGFA-GEVAERT Aktiengesellschaft**
**D-5090 Leverkusen 1 (DE)**

(72) Erfinder : **Neudecker, Karl**
**Heimgartenstr. 4**
**D-8000 München 90 (DE)**

Diaprojektor und Diamagazin

Die Erfindung betrifft einen Diaprojektor für gerahmte Diapositive, die in Magazinen unterschiedlicher Typen angeordnet sind, wobei sich die verschiedenen Magazintypen durch eine unterschiedliche Diafachbreite unterscheiden, wobei ein motorisch oder von Hand betätigbarer Diawechselschieber und eine Vorrichtung zum schrittweisen Weitertransport des jeweils eingesetzten Magazins um jeweils eine Diafachbreite nach der Zurückführung eines projizierten Dias in das Magazin vorgesehen sind, wobei die Breite des Diawechselschiebers in seinem Teilabschnitt, der beim Diatransport zwischen die in einem Magazin befindlichen Dias ein- und ausfahren und dabei jeweils das mittlere von drei Dias mitnehmen muß, kleiner ist als der Abstand zwischen einem Dia und dem übernächsten, in dem Magazin mit der geringeren Diafachbreite angeordneten Dia und wobei ein in Transportrichtung des Diawechselschiebers verschiebbarer Reiter in diesen Teilabschnitt und zwar an die Stirnkante des Diawechselschiebers bewegbar ist, dessen Breite größer als die des Wechselschiebers bzw. von dessen Stirnkante und kleiner als der Abstand zwischen einem Dia und dem übernächsten Dia in dem Magazin mit der größeren Diafachbreite ist.

Bei dieser Anordnung ist es möglich, daß ein Benutzer vergißt, den Reiter bei Verwendung eines Magazins mit der geringeren Diafachbreite in seine unwirksame Lage zurückzuschieben. Es kann dann vorkommen, daß der Reiter beim Diatransport mehrere der dicht beeinander liegenden Dias gleichzeitig erfaßt, was zu Verklemmungen der Dias im Projektor führt.

Der vorliegenden Erfindung liegt die Aufgabe zugrunde, einen Projektor der eingangs genannten Art so auszubilden, daß bei Verwendung eines Magazins mit der kleineren Diafachbreite und hierfür ungeeigneter Stellung des Reiters der Betrieb des Projektors nicht möglich ist.

Diese Aufgabe wird erfindungsgemäß durch die Merkmale des Hauptanspruchs gelöst.

Die Erfindung wird anhand von Zeichnungen näher erläutert. Es zeigen

Figur 1 eine perspektivische Darstellung eines erfindungsgemäßen Stehbildprojektors und zugehöriger Diamagazine, teilweise aufgebrochen,

Figur 2 einen Schnitt durch eine weitere Ausgestaltung eines erfindungsgemäßen Details.

In den Figuren ist mit 1 ein Stehbildprojektor beziffert, der zur Vorführung von gerahmten Diapositiven 2, welche in einem bekannten sog. Einheitsmagazin 3 angeordnet sind, ausgestattet ist.

Dieser bekannte Magazintyp 3 weist drei Bodenleisten 3a auf, die durch eine breite und eine schmale Ausnehmung 3b, 3c voneinander getrennt sind. Dabei ist an der äußeren Bodenleiste, die die breite Ausnehmung 3c begrenzt, eine Zahnstange 3d vorgesehen. Die im Einheitsmagazin 3 befindlichen Dias 2 liegen auf den Bodenleisten 3a auf und sind durch Fachwände 3e voneinander getrennt. Die Höhe der Fachwände 3e ist erheblich kleiner als die Höhe der Diarahmen 2, so daß die Diarahmen 2 durch einen von Hand oder motorisch zu betätigenden projektorseitigen Diawechselschieber 4 oberhalb der Fachwände 3e erfaßt und an der Magazinseite, an der die Fächer offen sind, in den Belichtungsstrahlengang des Projektors 1 und zurück ins Magazin 3 bewegt werden können.

Der Projektor 1 weist eine Führungsbahn 5 auf, die schachtartig ausgebildet ist und etwa die Breite des Magazintyps 3 hat. Am Boden der Führungsbahn 5 sind zwei zur Diaeinführöffnung 6 etwa symmetrische Keile 7, 8 vorgesehen, die so angeordnet sind, daß die Ausnehmungen 3c, 3b eines in die Führungsbahn 5 eingesetzten Magazins 3 darübergleiten. Sie dienen dazu, daß die Dias 2 von ihrer Lage auf den Bodenleisten 3a allmählich beim Transport des Magazins 3 in die Höhe der Einführöffnung 6 angehoben werden und nach ihrer Vorführung wieder auf die Bodenleisten 3a herabsinken. Im oder unterhalb des Keiles 7 ist, der Zahnstange 3d zugewandt, ein Zahnrad 9 auf einer Welle angeordnet. Das Zahnrad 9 wird nach jedem Diawechsel entweder motorisch oder von Hand durch eine nicht gezeigte Schaltvorrichtung am Wechselschieber 4 um einen Zahn fortgeschaltet. Die Fortschaltung um einen Zahn entspricht dabei der Fortschaltung des Magazins 3 um ein Diafach. Zu beiden Seiten der Einführöffnung 6 sind Doppelkeile 10a, 10b vorgesehen, die dafür sorgen, daß beim Magazintransport die Dias 2 im Magazin 3 ausgerichtet und das jeweils zu projizierende Dia 2 auf die Einführöffnung 6 ausgerichtet wird.

Nun soll in dem Projektor 1 auch noch ein zweiter Magazintyp 11 verwendet werden können, bei dem der Abstand der Diafächer kleiner ist. Mit dem Magazintyp 3 hat der Magazintyp 11 die drei Bodenleisten 11a und die Ausnehmungen 11b, 11c gemeinsam. Auch bei diesem Magazintyp 11 sind die Fächer zur Einführöffnung 6 hin offen. Auch stehen die Dias 2 oben über das Magazin 11 vor. Der Magazintyp 11 ist jedoch breiter, so daß er nicht in die Führung 5 eingeschoben werden kann. Seine Zahnstange 11d liegt näher an der Längsmittelebene des Magazins als beim Magazin 3. Am Projektor 1 ist koaxial zum Zahnrad 9 ein darüber liegendes Zahnrad 12 vorgesehen. Sein Durchmesser und seine Lage sind so bemessen, daß das Zahnrad 12 mit der Zahnstange 11d beim Einsetzen eines Magazins 11 in den Projektor 1 in Eingriff gelangt und bei Drehung um einen Zahn das Magazin 11 um ein Diafach weiter transportiert. Um eine einfache Fortschaltungsvorrichtung zu erhalten, können Zahnstangen 3d, 11d und Zahnräder 9, 12 so ausgelegt werden, daß die Zahnräder 9, 12 die gleiche Zähnezahl haben. Im Magazin 11 werden die Dias 2 nicht angehoben, sondern nur seitlich aus- und eingeschoben. Deshalb muß das Magazin 11 so in den Projektor eingesetzt werden, daß die Auflagefläche der Bodenleisten 11a unmittelbar über der höchsten Erhebung der Keile 7, 8 liegt. Deshalb ist der zweite Magazintyp 11 nicht in die Führungsbahn 5 für den Magazintyp 3 einsetzbar. Vielmehr sind an den Längsseiten der Führungsbahn 5 Stufen 13 vorgesehen, die eine Führungsbahn für das Magazin 11 bilden. Die Höhe der Stufen 13 ist so bemessen, daß die Diaunterkanten der im Magazin 11 befindlichen Dias 2 gerade über den Keilen 7, 8 liegen, also ohne Anhebung über die Keile 7, 8 und quer dazu in die Einführöffnung 6 mittels des Wechselschiebers 4 bewegt werden können. Die Zahnstange 11d reicht bis in den Raum zwischen der Schachtwand und dem Keil 7, so daß sie mit dem Zahnrad 12 in Eingriff gelangen kann.

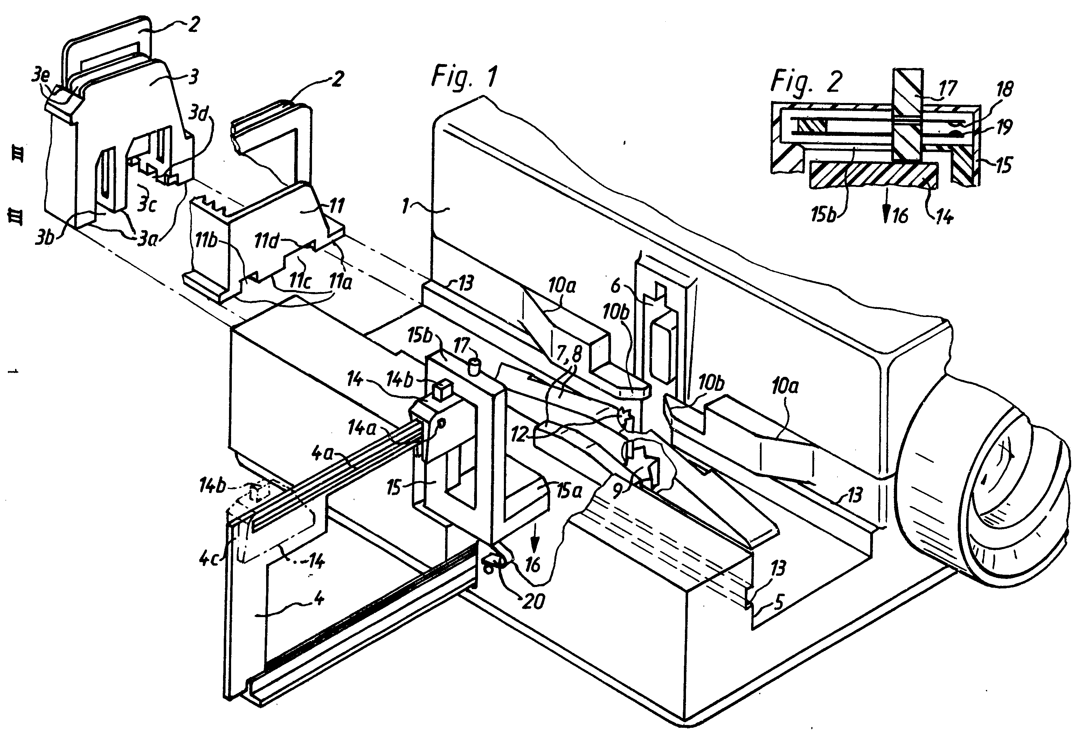

Nachdem die Dias 2 im Magazintyp 11 enger beisammen angeordnet sind oder auch dünner sein können, muß der Wechselschieber 4 eine Breite haben, die so gering ist, daß er zwischen den eng beisammen liegenden Dias durchfahren und das jeweils zu projizierende, ggf. dünne Dia in das Projektionsfenster des Projektors 1 schieben kann. Ein derartig schmaler Schieber 4 ist aber u. U. nicht geeignet, dickere Dias im Magazin 3 ordnungsgemäß zu erfassen und zu transportieren. Aus diesem Grund ist auf den Wechselschieber 4 ein längs eines Schlitzes 4a verschiebbarer Reiter 14 aufgesetzt, der an seiner der Einführöffnung 6 abgewandten Seite 2 Rastnocken 14a aufweist. Dieser Reiter 14 ist so breit, daß er zwischen die Dias 2 im Magazin 3 einfahren und auch dickere Dias 2 erfassen kann. Bei Verwendung des Magazintyps 3 wird der Reiter 14 an das der Einführöffnung 6 zugewandte Ende des Wechselschiebers 4 in dem Schlitz 4a verschoben, so daß seine Rastnocken 14a an der Stirnseite 4c des Schiebers 4 verrasten. Sollen jedoch Magazine vom Magazintyp 11 verwendet werden, so wird der Reiter an das der Einführöffnung 6 abgewandte Ende des Wechselschiebers 4 verschoben, so daß er bei Betätigung des Wechselschiebers 4 nicht mehr auf ein Magazin 11 trifft, vgl. hierzu die strichpunktiert gezeichnete Stellung des Reiters 14 in Fig. 1.

Um nun die Stellung des Reiters 14 und den jeweils verwendeten Magazintyp 3, 11 einander zuzuordnen, ist ein unter der Wirkung einer Feder 20 entgegen der Pfeilrichtung 16 drückbarer Abtaster 15 vorgesehen, der mit einer trapezförmigen Auflauffläche 15a in die Magazinbahn 13 für den Magazintyp 11 mit der geringeren Diafachbreite ragt. Der Abtaster 15 übergreift mit einem bügelförmigen Teil 15b sowohl den Transportarm des Wechselschiebers 4 mit der Stirnkante 4c als auch den Reiter 14, der nach oben hin einen Vorsprung 14b aufweist.

Befindet sich ein Einheitsmagazin 3 in der hierfür vorgesehenen Führungsbahn 5, so steht unter der Wirkung der Feder 20 die Auflauffläche 15a in die Magazinbahn 13 für Magazine des Typs 11 vor, so daß der Bügel 15b so hoch liegt, daß der Reiter 14, 14b unter dem Bügel 15b hindurch bewegbar ist. Der Reiter 14 kann also in der hierfür vorgesehenen Stellung an der Stirnseite 4c des Wechselschiebers 4 angeordnet sein. Wird nun ein Diamagazin 11 mit der geringeren Diafachbreite in die Magazinbahn 13 eingesetzt, so wird der Bügel 15b über die durch das Magazin 11 nach unten gedrückte Auflauffläche 15 entgegen der Wirkung der Feder 20 in Pfeilrichtung 16 gedrückt. Befindet sich dabei der Reiter 14 noch in der gezeichneten Stellung für Magazin 3 der größeren Fachbreite an der Stirnseite 4c des Wechselschiebers 4, so daß er bei einem Diatransport mehrere Dias mitnehmen könnte, so liegt in Diatransportrichtung vor dem Vorsprung 14b der Bügel 15b und sperrt den Wechselschieber 4 gegen Betätigung, so daß ein Benutzer darauf aufmerksam wird, daß er den Reiter 14 in die strichpunktiert gezeichnete Stellung am der Einführöffnung 6 abgewandten Ende des Wechselschiebers 4 verschieben muß. In dieser bereits beschriebenen Stellung des Wechselschiebers 4 reicht der Betätigungsweg des Reiters 14, 14b bei einem Diatransport nicht mehr bis zu dem Bügel 15b, so daß letzterer dem Wechselschieber 4 nicht mehr hindernd im Wege steht. Somit ist lediglich bei Stellung des Reiters 14 an der Stirnseite 4c des Wechselschiebers und Verwendung eines Magazins 11 mit der geringeren Diafachbreite der Projektor über den Wechselschieber 4 gegen Betätigung gesperrt.

Zusätzlich zu der oder anstelle der in Fig. 1 gezeigten und vorstehend beschriebenen Sperrvorrichtung 14b, 15b und ihrer Steuerung über die Feder 20 und die Auflauffläche 15a kann auch eine elektrische Sperrvorrichtung treten, in dem ein Hauptschalter 18, 19 des Projektors 1 nur bei Stellung des Reiters 14 an der Stirnseite 4c des Wechselschiebers bei gleichzeitiger Verwendung eines Magazins 11 der geringeren Diafachbreite geöffnet und somit der Projektor 1 abgeschaltet wird. Auch hierzu kann die Auflauffläche 15a mit Bügel 15b Verwendung finden, wobei der Bügel 15b entsprechend Figur 2 ausgebildet ist. In seinem hohlen Inneren ist nämlich ein zwei Kontakte 18, 19 aufweisender Hauptschalter vorgesehen. Der der Feder 20 nach Fig. 1 abgewandte, obere Schaltkontakt 18 ist mit einem in Pfeilrichtung 16 bewegbaren Stift 17 verbunden, wobei die Kontaktfeder 18 zugleich dessen Steuerfeder bildet. In der in Fig. 1 nicht gezeigten oberen Stellung des Abtastgliedes 15 (entgegen Pfeilrichtung 16) liegt der Schaltkontakt 18 infolge seiner entsprechenden Vorspannung am Schaltkontakt 19 an. Der Reiter 14 ist an die Stirnseite 4c des Wechselschiebers 4 gerückt, und die Verwendung eines Einheitsmagazine 3 ist vorgesehen bzw. möglich. Wird statt dessen ein Magazin 11 mit der geringeren Diafachbreite in die Magazinbahn 13 eingeschoben, ohne daß der Reiter 14 aus seiner ausgezogen gezeichneten Stellung nach Fig. 1 zurückgeschoben wird, so wird der Bügel 15b über die Auflauffläche 15a durch das Magazin 11 in Pfeilrichtung 16 in die in Fig. 1 und 2 gezeichnete Stellung gedrückt. Hierbei trifft der Stift 17 auf den Reiter 14 und wird entgegen der Federwirkung des Schaltkontakts 18 zusammen mit diesem angehoben, so daß der Hauptschalter 17, 18 geöffnet wird und der Projektor abgeschaltet ist. Wird nun der Reiter 14 in die strichpunktiert gezeichnete, bei Verwendung des Magazintyps 11 vorgesehene Stellung zurückgeschoben, so fällt der Stift 17 unter der Wirkung des Schaltkontakts wieder so weit nach unten nach, bis der Schalter 18, 19 wieder geschlossen ist. Somit ist in der für die Magazine 11 richtigen Stellung des Reiters 14 der Projektor wieder betriebsbereit.

Selbstverständlich sind noch andere, der Einfachheit halber in den Figuren nicht gezeigte Ausführungsbeispiele möglich. So könnte an die Stelle eines mechanischen, federnden Abtasters ein opto-elektronischer Abtaster treten, der z. B. über Lampen und lichtelektrische Wandler bei gleichzeitigem Vorhandensein eines Magazins 11 in der Führungsbahn 13 und des Reiters 14 an der Stirnseite 4c entweder einen Hauptschalter ausschaltet oder eine andere, z. B. magnetisch arbeitende Sperre betätigt.

**Ansprüche**

1. Diaprojektor für gerahmte Diapositive, die in Magazinen unterschiedlicher Typen angeordnet sind, wobei sich die verschiedenen Magazintypen durch eine unterschiedliche Diafachbreite unterscheiden, wobei ein motorisch oder von Hand betätigbarer Diawechselschieber und eine Vorrichtung zum schrittweisen Weitertransport des jeweils eingesetzten Magazins um jeweils eine Diafachbreite nach der Zurückführung eines projizierten Dias in das Magazin vorgesehen sind, wobei die Breite des Diawechselschiebers in seinem Teilabschnitt, der beim Diatransport zwischen die in einem Magazin befindlichen Dias ein- und ausfahren und dabei jeweils das mittlere von drei Dias mitnehmen muß, kleiner ist als der Abstand zwischen einem Dia und dem übernächsten, in dem Magazin mit der geringeren Diafachbreite angeordneten Dia und wobei ein in Transportrichtung des Diawechselschiebers verschiebbarer Reiter in diesen Teilabschnitt und zwar an die Stirnkante des Diawechselschiebers bewegbar ist, dessen Breite größer als die des Wechselschiebers bzw. von dessen Stirnkante und kleiner als der Abstand zwischen einem Dia und dem übernächsten Dia in dem Magazin mit der größeren Diafachbreite ist, dadurch gekennzeichnet, daß für die unterschiedlichen Magazintypen (3, 11) unterschiedliche Magazinführungsbahnen (5, 13) vorgesehen sind und in eine Magazinführungsbahn (13) ein Abtaster (15) ragt zur Abtastung des Vorhandenseins eines Magazins (11) des dieser Magazinführungsbahn (13) zugeordneten Magazintyps (11), daß der Abtaster (15) in Abhängigkeit von einem in die eine Magazinführungsbahn (13) eingesetzten Magazin (11) in die Bewegungsbahn des Reiters (14) zustellbar ist zur Abtastung von dessen Stellung auf dem Diawechselschieber (4) und Steuerung einer Betätigungssperre (14b bzw. 17, 18, 19) für den Projektor (1, 4) bei einer dem in dieser Magazinführungsbahn (13) angeordneten Magazintyp (11) nicht entsprechenden Stellung des Reiters (14).

2. Diaprojektor nach Anspruch 1, dadurch gekennzeichnet, daß der Abtaster (15) federnd in der Magazinführungsbahn (13) für den Magazintyp (11) mit der kleineren Diafachbreite als Auflauffläche (15a) angeordnet ist und einen den Wechselschieber (4) und den Reiter (14) übergreifenden Bügel (15b) aufweist, der in Abhängigkeit von einem in diese Magazinführungsbahn (13) eingesetzten oder nicht eingesetzten Magazin (11) entgegen bzw. unter der Wirkung einer Feder (20) in die bzw. aus der Bewegungsbahn des Reiters (14) bewegbar ist.

3. Diaprojektor nach Anspruch 1 oder 2, dadurch gekennzeichnet, daß mit dem Abtaster (15) ein Projektorhauptschalter (18, 19) verbunden ist, dessen einer Schaltkontakt (18) mit einem Taststift (17) verbunden ist, durch den der Schaltkontakt (18) vom anderen Schaltkontakt (19) abhebbar ist, wenn der Taststift (17) mit dem Reiter (14) in Verbindung steht oder kommt.

**Claims**

1. A slide projector for mounted slides which are arranged in magazines of various types, wherein the different magazine types differ by a varying compartment width, wherein there are provided a motor — or manually operated slide change pusher and a device for stepwise forward transport of the magazine used in each case by the width of a slide compartment after the projected slide has been brought back to the magazine, wherein the width of the slide change pusher in section, which during transport of the slide must travel in and our between the slides located in a magazine and in each case must pick up the middle one of the three slides, is less than the distance between one slide and the next but one, in the slide arranged in the magazine with the smaller slide compartment width, and wherein a slider which can be displaced in the transport direction of the slide change pusher is movable in this section as far as the front edge of the slide change pusher, the width of the slider being greater than that of the change pusher or its front edge and smaller than the distance between one slide and the next but one in the magazine with the greater slide compartment width, characterized in that various magazine guideways (5, 13) are provided for the varying magazine types (3, 11) and a scanner (15) projects into a magazine guideway (13) to scan the presence of a magazine of the magazine type (11) associated with this magazine guideway (13) ; in that the scanner (15) can be delivered as a function of a magazine (11) used in one magazine guideway (13) into the path of movement of the slider (14) for scanning the position of the slider (14) on the slide change pusher (4) and controlling an operating barrier (14b or 17, 18, 19) for the projector (1, 4) in a position of the slider (14) which does not correspond to the magazine type arranged in this magazine guideway (13).

2. A slide projector according to claim 1, characterized in that the scanner (15) is resiliently arranged in the magazine guideway (13) for the magazine type (11) with the smaller slide compartment width as an abutting surface (15a) and comprises a bracket (15b) overlapping the change pusher (4) and the slider (14), and the bracket (15b) can be moved as a function of a magazine (11) which is used or not used in this magazine guideway (13) against or under the action of a spring (20) into or out of the path of motion of the slider (14).

3. A slide projector according to claim 1 or 2, characterized in that a projector main switch (18, 19) is connected to the scanner (15), a switching contact (18) of the projector main switch (18, 19) being connected to a scanning pin (17) by which the switching contact (18) can be lifted up from the other switching contact (19) when the scanning pin (17) is in contact with the slider (14).

**Revendications**

1. Projecteur de diapositives pour des diapositives encadrées, qui sont disposées dans des magasins de types différents, les types de magasin se distinguant les uns des autres par une largeur de casier différente pour les diapositives, et il est prévu un passe-vues pouvant être actionné par un moteur ou à la main et un dispositif pour le transport supplémentaire, pas-à-pas, du magasin utilisé sur une largeur respective de casier à diapositive après le retour d'une diapositive projetée dans le magasin, la largeur du passe-vues, dans sa section partielle, qui, lors du transport d'une diapositive, doit entrer et sortir entre les diapositives se trouvant dans un magasin et qui doit entraîner avec lui parmi trois diapositives la diapositive médiane, étant plus petite que l'intervalle entre une diapositive et celle qui vient immédiatement après la suivante et qui est disposée dans le magasin ayant la largeur de casier la plus petite, et dans lequel un cavalier pouvant coulisser dans la direction de transport du passe-vues est mobile dans cette section partielle, et, en fait, sur l'arête frontale du passe-vues, et a une largeur plus grande que celle du passe-vues ou de l'arête frontale de celui-ci et plus petite que l'intervalle entre une diapositive et la diapositive qui vient immédiatement après la suivante dans le magasin ayant la largeur de casier la plus grande, caractérisé en ce que pour des types de magasin différents (3, 11) sont prévues des glissières de guidage de magasin (5, 13) différentes et dans une glissière de guidage de magasin (13) fait saillie un palpeur (15) destiné à palper la présence d'un magasin du type (11) affecté à cette glissière de guidage de magasin (13), en ce que le palpeur (15) peut être, en fonction d'un magasin (11) introduit dans l'une des glissières de guidage de magasin (13), amené dans le trajet de déplacement du cavalier (14) pour en palper la position sur le passe-vues (4) et pour commander un organe de blocage de la manœuvre (14 et 17, 18, 19) du projecteur (1, 4) pour une position du cavalier (14) ne correspondant pas au type de magasin (11) disposé dans cette glissière de guidage du magasin (13).

2. Projecteur de diapositives selon la revendication 1, caractérisé en ce que le palpeur (15) est monté élastiquement sous forme d'une surface s'élevant (15a) dans la glissière de guidage du magasin (13) pour le type de magasin (11) ayant la largeur de casier à diapositive la plus petite et présente une pièce en U (15b), qui surmonte les passe-vues (4) et le cavalier (14) et qui, selon qu'un magasin (11) est engagé dans cette glissière de guidage de magasin (13) ou ne l'est pas, peut être déplacé à l'encontre ou sous l'action d'un ressort (20) dans ou hors du trajet de déplacement du cavalier (14).

3. Projecteur de diapositives selon la revendication 1 ou 2, caractérisé en ce qu'au palpeur (15) est relié un interrupteur principal de projecteur (18, 19), dont l'un des contacts (18) est relié à une tige de palpeur (17) par laquelle le contact (18) peut être soulevé de l'autre contact (19) quand la tige de palpeur (17) est en liaison ou vient en liaison avec le cavalier (14).

Fig. 1

Fig. 2